# EUROPÄISCHE PATENTSCHRIFT

(11) **EP 0 882 077 B1**
(45) Veröffentlichungstag und Bekanntmachung des Hinweises auf die Patenterteilung: **02.05.2001**
(21) Anmeldenummer: 97905048.1
(22) Anmeldetag: 19.02.1997
(51) Int. Cl.: C08F 10/00

(54) **VERFAHREN ZUR HERSTELLUNG VON POLYMERISATEN VON ALKENEN DURCH GASPHASENPOLYMERISATION**
PROCESS FOR PRODUCING ALKENE POLYMERS BY GAS PHASE POLYMERISATION
PROCEDE DE PRODUCTION DE POLYMERES D'ALCENES PAR POLYMERISATION EN PHASE GAZEUSE

(30) Priorität: 20.02.1996 DE 19606165
(43) Veröffentlichungstag der Anmeldung: 09.12.1998
(73) Patentinhaber: BASF AKTIENGESELLSCHAFT, 67056 Ludwigshafen (DE)
(72) Erfinder: LYNCH, John, D-67590 Monsheim (DE); FISCHER, David, D-67161 Gönnheim (DE); GÖRTZ, Hans-Helmut, D-67251 Freinsheim (DE); SCHWEIER, Günther, D-67159 Friedelsheim (DE)
(86) Internationale Anmeldenummer: EP9700772
(87) Internationale Veröffentlichungsnummer: WO9731039

(56) Entgegenhaltungen:
- EP-A- 0 589 638
- WO-A-95/15815
- WO-A-96/34020

## Beschreibung

Die vorliegende Erfindung betrifft Verfahren zur Herstellung von Polymerisaten von Alkenen durch Gasphasenpolymerisation in Gegenwart von Katalysatorsystemen.

Ein Herstellverfahren für Polymerisate des Ethylens durch Gasphasenpolymerisation ist beispielsweise in der WO 95/07942 beschrieben. Hierbei wird jedoch ein Dialkylmetallocen eingesetzt, das den aktiven Katalysator bildet.

Aus der WO 91/09882 ist die Herstellung eines geträgerten, kationischen Metallocen-Katalysators durch Aufbringen der Reaktionsmischung eines Dialkylmetallocens mit einer ionischen Verbindung, die als Kation eine Brönsted-Säure und als Anion ein nichtkoordinierendes Gegenion wie Tetrakis(pentafluorphenyl)borat besitzt, auf einen anorganischen Träger bekannt. Auch hierbei wird ein aktiver Katalysator erhalten.

Ähnliche geträgerte Katalysatorsysteme sind auch aus der WO 94/03506 und der WO 95/14044 bekannt.

In der EP-A 628 574 sind geträgerte Katalysatorsysteme beschrieben, bei denen ein Metallocendihalogenid in Anwesenheit eines Boronats mit einem Aluminiumalkyl umgesetzt und diese polymerisationsaktive Lösung auf einen Träger aufgebracht wird.

Solche schon aktive Katalysatoren führen leicht zu Problemen bei der Dosierung des Katalysators in den Reaktor.

Vorteilhaft ist daher ein noch inaktiver Katalysator, der erst zu einem späteren Zeitpunkt, beispielsweise bei der Dosierung oder auch erst im Reaktor, aktiviert werden kann.

Aus der EP-A 613 908 sind geträgerte Metallocenkatalysatorsysteme bekannt, die teilweise erst im Reaktor aktiviert werden. Hierbei weisen jedoch die entstehenden Polymerisate eine breite Molekulargewichtsverteilung M_{w}/Mₙ auf.

Die WO 95/15815 beschreibt Katalysatoren, die durch Trägerung eines Metallocendichlorids und eines Borats auf einem vernetzten Polymer erhalten werden. Die Verwendung von desaktivierten anorganischen Trägern liefert Katalysatoren, die nach der Aktivierung im Polymerisationsreaktor entweder nur eine geringe oder gar keine Aktivität mehr aufweisen. HIerbei wurde eine Lösung der metalloceniumionenbildenden Verbindung zu einer trockenen Mischung aus desaktiviertem anorganischem Träger und Metallocenkomplex gegeben.

Gegenstand der EP-A 589 638 sind pulverförmige Katalysatorzusammensetzungen, bei denen eine Lösung oder Dispersion einer Übergangsmetallverbindung (Subkomponente i) und einer Verbindung, die diese in ein Kation überführen kann, (Subkomponente ii) in einem Kohlenwasserstoff (wobei diese Lösung oder Dispersion als Komponente B bezeichnet wird) mit einer feinteiligen anorganischen Verbindung (Komponente A) überzogen ist. Der mittlere Teilchendurchmesser der Komponente A liegt im Bereich von 0,003 bis 1 µm. Es entstehen Partikel, die im Inneren eine Flüssigkeit aufweisen und deren Oberfläche von festen Teilchen der Komponente A gebildet wird.

Die WO 96/34020 beschreibt geträgerte Katalysatorsysteme, die einen Träger, eine Metallocenverbindung, einen Aktivator und eine inerte Kohlenwasserstoff-Komponente enthalten. Zu deren Herstellung kann das Umsetzungsprodukt eines Dimethylmetallocens und eines ionischen Aktivators verwendet werden.

Aufgabe der vorliegenden Erfindung war es daher, ein Verfahren zur Herstellung von Polymerisaten von Alkenen durch Gasphasenpolymerisation zur Verfügung zu stellen, welches die genannten Nachteile nicht aufweist, bei dem insbesondere das Katalysatorsystem zu einem beliebigen Zeitpunkt aktivierbar ist, lange gelagert werden kann, nicht pyrophor ist und wobei die entstehenden Polymerisate eine enge Molekulargewichtsverteilung aufweisen.

Demgemäß wurde ein Verfahren zur Herstellung von Polymerisaten von Alkenen durch Gasphasenpolymerisation in Gegenwart von Katalysatorsystemen gefunden, welches dadurch gekennzeichnet ist, daß als Katalysatorsysteme geträgerte Katalysatorsysteme, erhältlich durch
A) Umsetzung eines anorganischen Trägermaterials, welches ein feinteiliger Feststoff ist, dessen Teilchendurchmesser im Bereich von 1 bis 200 µm liegen, mit einer Metallverbindung der allgemeinen Formel I

   M¹(R¹)ᵣ(R²)ₛ(R³)ₜ(R⁴)ᵤ I

   in der
   - M¹: ein Alkali-, ein Erdalkalimetall oder ein Metall der III. oder IV. Hauptgruppe des Periodensystems bedeutet,
   - R¹: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
   - R² bis R⁴: Wasserstoff, Halogen, C₁- bis C₁₀-Alkyl, C₆- bis C₁₅-Aryl, Alkylaryl, Arylalkyl, Alkoxy oder Dialkylamino mit jeweils 1 bis 10 C-Atomen im Alkylrest und 6 bis 20 C-Atomen im Arylrest,
   - r: eine ganze Zahl von 1 bis 4 und
   - s, t und u: ganze Zahlen von 0 bis 3 bedeuten, wobei die Summe r+s+t+u der Wertigkeit von M¹ entspricht,
B) Umsetzung des nach A) erhaltenen Materials mit dem Umsetzungsprodukt aus mindestens einem Metallocenkomplex in seiner Metalldihalogenid-Form und einer metalloceniumionenbildenden Verbindung, ausgewählt aus der Gruppe der starken neutralen Lewissäuren, der allgemeinen Formel IV

   M⁴X¹X²X³ IV,

   in der
   - M⁴: ein Element der III. Hauptgruppe des Periodensystems bedeutet,
   - X¹, X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen,
   der ionischen Verbindungen mit lewissauren Kationen und der ionischen Verbindungen mit Brönsted-Säuren als Kationen,
   und
C) anschließender Umsetzung mit einer Metallverbindung der allgemeinen Formel II

   M²(R⁵)ₒ(R⁶)ₚ(R⁷)_{q} II

   in der
   - M²: ein Metall der III. Hauptgruppe des Periodensystems bedeutet,
   - R⁵: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
   - R⁶ und R⁷: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
   - O: eine ganze Zahl von 1 bis 3 und
   - p und q: ganze Zahlen von 0 bis 2 bedeuten, wobei die Summe o+p+q der Wertigkeit von M² entspricht,
   eingesetzt werden.

Das erfindungsgemäße Verfahren wird zur Herstellung von Polymerisaten von Alkenen verwendet. Unter dem Begriff Polymerisate werden sowohl Homo- als auch Copolymerisate verstanden. Geeignete Alkene sind insbesondere Alk-1-ene, vorzugsweise Ethylen und Propylen, insbesondere Ethylen. Als Comonomere sind ebenfalls Alk-1-ene besonders geeignet, vorzugsweise unverzweigte C₄- bis C₁₀-Alk-1-ene, insbesondere But-1-en, Hex-1-en und Oct-1-en. Es können aber auch andere Alkene eingesetzt werden, beispielsweise Cycloolefine oder höhere Alkene.

Bei dem erfindungsgemäßen Verfahren werden geträgerte Katalysatorsysteme eingesetzt, die dadurch erhältlich sind, daß in einer ersten Stufe A) ein anorganisches Trägermaterial mit einer Metallverbindung der allgemeinen Formel I umgesetzt wird.

Als Trägermaterialien werden feinteilige Feststoffe eingesetzt, deren Teilchendurchmesser im Bereich von 1 bis 200 µm liegen, insbesondere 30 bis 70 µm.

Geeignete Trägermaterialien sind beispielsweise Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace.

Andere anorganische Verbindungen wie Al₂O₃ oder MgCl₂ oder diese Verbindungen enthaltende Mischungen können ebenfalls als Trägermaterialien eingesetzt werden.

Von den Metallverbindungen der allgemeinen Formel I sind diejenigen bevorzugt, bei denen M¹ für ein Metall der III. Hauptgruppe des Periodensystems steht, insbesondere für Aluminium, R¹ für C₁-bis C₁₀-Alkyl und R² bis R⁴ für C₁- bis C₁₀-Alkyl. Für den besonders bevorzugten Fall, daß M¹ für Aluminium steht, ist u Null und die Reste R¹ bis R³ weisen insbesondere die gleiche Bedeutung auf, vorzugsweise Methyl, Ethyl, iso-Butyl oder Hexyl, bevorzugt iso-Butyl.

Vorzugsweise wird die Metallverbindung der allgemeinen Formel I als Lösung zu einer Suspension des Trägers gegeben. Als Lösungs- bzw. Suspensionsmittel sind insbesondere Kohlenwasserstoffe wie Heptan geeignet. Die Menge an Metallverbindung I kann in weiten Grenzen variieren, die Mindestmenge richtet sich nach der Anzahl der Hydroxygruppen des Trägers. Die Temperaturen, Reaktionszeiten und Drücke sind an sich unkritisch, bevorzugt sind Temperaturen von 0 bis 80°C und Reaktionszeiten von 0,1 bis 48 Stunden.

Es hat sich als geeignet erwiesen, nach der Trägervorbehandlung die überschüssige Metallverbindung I durch Auswaschen, beispielsweise mit Kohlenwasserstoffen wie Pentan oder Hexan, zu entfernen und den Träger zu trocknen.

Das so hergestellte Material ist bis zu 6 Monaten lagerbar und nicht pyrophor.

Dieses Material wird nun in einer weiteren Stufe B) mit einem Metallocenkomplex in seiner Metalldihalogenid-Form und einer metalloceniumionenbildenden Verbindung umgesetzt.

Als Metallocenkomplexe eignen sich beispielsweise folgende Verbindungen der allgemeinen Formel III: 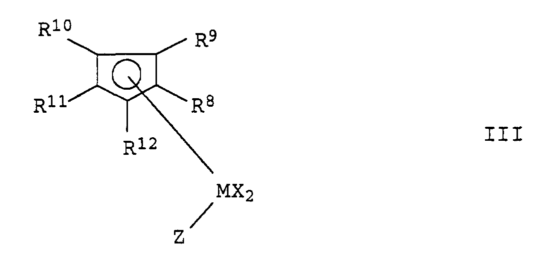 in der die Substituenten folgende Bedeutung haben:
- M: Titan, Zirkonium, Hafnium, Vanadium, Niob oder Tantal,
- X: Fluor, Chlor, Brom oder Iod,
- R⁸ bis R¹²: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können oder Si (R¹³)₃ mit
- R¹³: C₁- bis C₁₀-Alkyl, C₃- bis C₁₀-Cycloalkyl oder C₆- bis C₁₅-Aryl,
- Z: für X oder 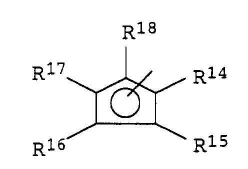 steht,
wobei die Reste
- R¹⁴ bis R¹⁸: 3 Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende cyclische Gruppen stehen können, oder Si(R¹⁹)₃ mit
- R¹⁹: C₁- bis C₁₀-Alkyl, C₆- bis C₁₅-Aryl oder C₃- bis C₁₀-Cycloalkyl,
oder wobei die Reste R¹¹ und Z gemeinsam eine Gruppierung -R²⁰-A-bilden, in der 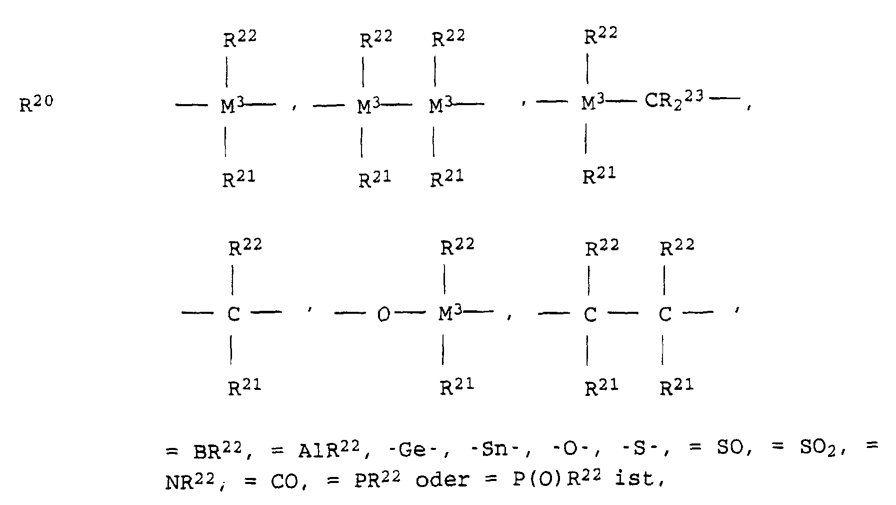
- wobei R²¹, R²² und R²³: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M³: Silicium, Germanium oder Zinn ist,
- A: ― O ―, ― S ―, 〉NR²⁴ oder 〉PR²⁴ bedeutet, mit
- R²⁴: C₁- bis C₁₀-Alkyl, C₆- bis C₁₅-Aryl, C₃- bis C₁₀-Cycloalkyl, Alkylaryl oder Si (R²⁵)₃,
- R²⁵: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R¹¹ und R¹⁷ gemeinsam eine Gruppierung -R²⁰-bilden.

Von den Metallocenkomplexen der allgemeinen Formel III sind 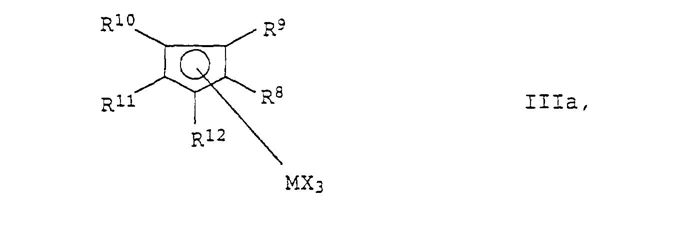 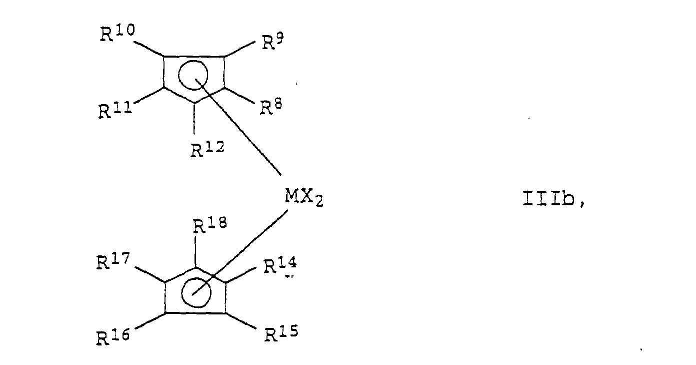 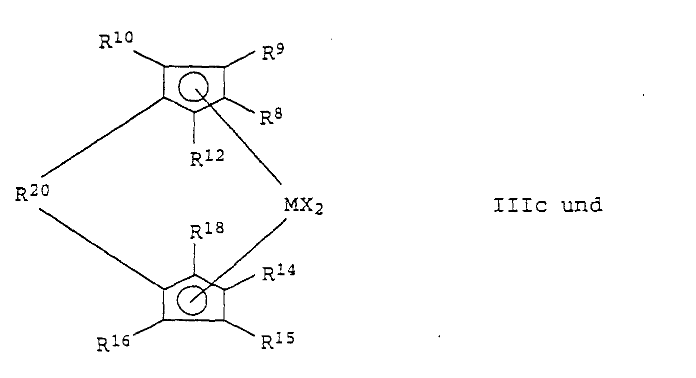 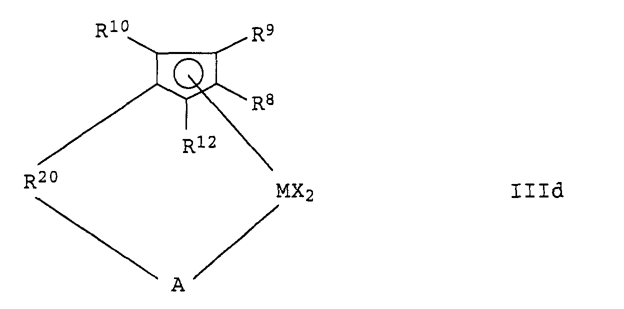 bevorzugt.

Die Reste X können gleich oder verschieden sein, bevorzugt sind sie gleich.

Von den Verbindungen der Formel IIIa sind insbesondere diejenigen bevorzugt, in denen
- M: Titan, Zirkonium oder Hafnium,
- X: Chlor und
- R⁸ bis R¹²: Wasserstoff oder C₁- bis C₄-Alkyl bedeuten.

Von den Verbindungen der Formel IIIb sind als bevorzugt diejenigen zu nennen, bei denen
- M: für Titan, Zirkonium oder Hafnium steht,
- X: für Chlor,
- R⁸ bis R¹²: Wasserstoff, C₁- bis C₄-Alkyl oder Si (R¹³)₃,
- R¹⁴ bis R¹⁸: Wasserstoff, C₁- bis C₄-Alkyl oder Si(R¹⁹)₃ bedeuten.

Insbesondere sind die Verbindungen der Formel IIIb geeignet, in denen die Cyclopentadienylreste gleich sind.

Beispiele für besonders geeignete Verbindungen sind u.a.:
Bis(cyclopentadienyl)zirkoniumdichlorid,
Bis (pentamethylcyclopentadienyl) -zirkoniumdichlorid,
Bis (methylcyclopentadienyl)-zirkoniumdichlorid,
Bis (ethylcyclopentadienyl)-zirkoniumdichlorid,
Bis (n-butylcyclopentadienyl)-zirkoniumdichlorid und
Bis (trimethylsilylcyclopentadienyl)-zirkoniumdichlorid.

Von den Verbindungen der Formel IIIC sind diejenigen besonders geeignet, in denen
- R⁸ und R¹⁴: gleich sind und für Wasserstoff oder C₁- bis C₁₀-Alkylgruppen stehen,
- R¹² und R¹⁸: gleich sind und für Wasserstoff, eine Methyl-, Ethyl-, iso-Propyl- oder tert.-Butylgruppe stehen
- R⁹, R¹⁰, R¹⁵: und R¹⁶ die Bedeutung R¹⁰ und R¹⁶ C₁- bis C₄-Alkyl
R⁹ und R¹⁵ Wasserstoff
haben oder zwei benachbarte Reste R⁹ und R¹⁰ sowie R¹⁵ und R¹⁶ gemeinsam für 4 bis 12 C-Atome aufweisende cyclische Gruppen stehen, 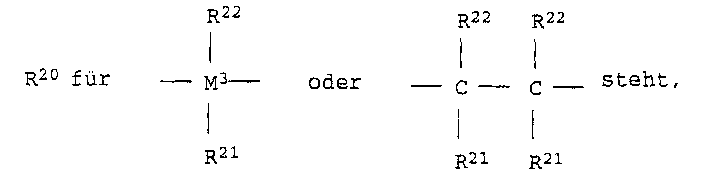
- M: für Titan, Zirkonium oder Hafnium und
- X: für Chlor stehen.

Beispiele für besonders geeignete Komplexverbindungen sind u.a.
Dimethylsilandiylbis (cyclopentadienyl) -zirkoniumdichlorid,
Dimethylsilandiylbis (indenyl)-zirkoniumdichlorid,
Dimethylsilandiylbis (tetrahydroindenyl)-zirkoniumdichlorid,
Ethylenbis (cyclopentadienyl)-zirkoniumdichlorid,
Ethylenbis (indenyl)-zirkoniumdichlorid,
Ethylenbis (tetrahydroindenyl)-zirkoniumdichlorid,
Tetramethylethylen-9-fluorenylcyclopentadienylzirkoniumdichlorid,
Dimethylsilandiylbis (-3-tert.butyl-5-methylcyclopentadienyl)-zirkoniumdichlorid,
Dimethylsilandiylbis (-3-tert.butyl-5-ethylcyclopentadienyl)-zirkoniumdichlorid,
Dimethylsilandiylbis (-2-methylindenyl) -zirkoniumdichlorid,
Dimethylsilandiylbis (-2-isopropylindenyl)-zirkoniumdichlorid,
Dimethylsilandiylbis (-2-tert.butylindenyl)-zirkoniumdichlorid,
Diethylsilandiylbis (-2-methylindenyl)-zirkoniumdibromid,
Dimethylsilandiylbis (-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis (-2-methylindenyl)-zirkoniumdichlorid,
Dimethylsilandiylbis (-2-methylbenzindenyl)-zirkoniumdichlorid und
Dimethylsilandiylbis (-2-methylindenyl)-hafniumdichlorid.

Bei den Verbindungen der allgemeinen Formel IIId sind als besonders geeignet diejenigen zu nennen, in denen
- M: für Titan oder Zirkonium,
- X: für Chlor stehen,
- R²⁰: für 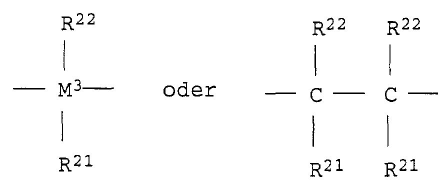 steht,
- A: für ― O― , ―S― , 〉NR²⁴
und
- R⁸ bis R¹⁰ und R¹²: für Wasserstoff, C₁- bis C₁₀-Alkyl, C₃- bis C₁₀-Cycloalkyl, C₆- bis C₁₅-Aryl oder Si (R¹⁴)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Unter metalloceniumionenbildenden Verbindungen sind starke, neutrale Lewissäuren, der allgemeinen Formel IV

M⁴X¹X²X³ IV,

in der
- M⁴: ein Element der III. Hauptgruppe des Periodensystems bedeutet, insbesondere B, Al oder Ga, vorzugsweise B,
- X¹, X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl,
ionische Verbindungen mit lewissauren Kationen und ionische Verbindungen mit Brönsted-Säuren als Kationen zu verstehen.

Besonders bevorzugte starke, neutrale Lewissäuren sind Verbindungen der allgemeinen Formel IV, in der X¹, X² und X³ gleich sind, vorzugsweise Tris(pentafluorphenyl)boran.

Als ionische Verbindungen mit lewissauren Kationen sind Verbindungen der allgemeinen Formel V

[(Y^{a+})Q₁Q₂...Q_{z}]^{d+} V

geeignet, in denen
- Y: ein Element der I. bis VI. Hauptgruppe oder der I. bis VIII. Nebengruppe des Periodensystems bedeutet,
- Q₁ bis Q₂: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis (pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an metalloceniumionenbildenden Verbindungen beträgt bevorzugt 0,1 bis 10 Äquivalente, bezogen auf den Metallocenkomplex III.

Die Bedingungen für die Umsetzung des Metallocenkomplexes mit der metalloceniumionenbildenden Verbindung sind an sich unkritisch, bevorzugt arbeitet man in Lösung, wobei als Lösungsmittel insbesondere Kohlenwasserstoffe, vorzugsweise aromatische Kohlenwasserstoffe wie Toluol, geeignet sind.

Hierzu wird nun das nach A) hergestellte Material gegeben. Eine Menge von 0,1 bis 10 Gew.-% an Metallocenkomplex, bezogen auf das anorganische Trägermaterial ist besonders geeignet. Die Bedingungen für diese Umsetzung sind ebenfalls nicht kritisch, Temperaturen im Bereich von 20 bis 80°C und Reaktionszeiten im Bereich von 0,1 bis 20 Stunden haben sich als besonders geeignet erwiesen.

Das nach B) erhaltene Material kann nun isoliert werden und ist bis zu mindestens 6 Monaten lagerbar.

In einer weiteren Stufe C), der Aktivierungsstufe, wird das nach B) erhaltene Material mit einer Metallverbindung der allgemeinen Formel II umgesetzt. Diese Aktivierung kann zu einem beliebigen Zeitpunkt, d.h. vor, bei oder nach der Dosierung des nach B) erhaltenen Materials in den Reaktor, erfolgen. Vorzugsweise erfolgt die Aktivierung nach der Dosierung des nach B) erhaltenen Materials in den Reaktor.

Von den Metallverbindungen der allgemeinen Formel II

M²(R⁵)ₒ(R⁶)ₚ(R⁷)_{q} II

in der
- M²: ein Metall der III. Hauptgruppe des Periodensystems, d.h. Bor, Aluminium, Gallium, Indium oder Thallium bedeutet,
- R⁵: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
- R⁶ und R⁷: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
- O: eine ganze Zahl von 1 bis 3
und
- p und q: ganze Zahlen von 0 bis 2 bedeuten, wobei die Summe o+p+q der Wertigkeit von M² entspricht,
sind diejenigen Verbindungen bevorzugt, in denen
- M²: Aluminium bedeutet und
- R⁵ bis R⁷: für C₁- bis C₁₀-Alkyl stehen.

Besonders bevorzugte Metallverbindungen der allgemeinen Formel II sind Tri-n-hexyl-aluminium und Tri-iso-butyl-aluminium.

Die Bedingungen für die Umsetzung in Stufe C) sind an sich unkritisch. Temperaturen, Reaktionszeiten und Drücke richten sich nach dem Zeitpunkt der Umsetzung, d.h. Aktivierung.

Die Gasphasenpolymerisation ist an sich bekannt. Üblicherweise geht man so vor, daß man in einem Autoklaven Polyolefingrieß, vorzugsweise Polyethylen- oder Polypropylengrieß, vorlegt. Die Polymerisationstemperaturen liegen i.a. im Bereich von -50 bis 300°C, vorzugsweise im Bereich von -20 bis 100°C. Der Innendruck des Autoklaven kann durch Alkenzufuhr auf bis zu 80 bar, vorzugsweise auf bis zu 50 bar erhöht werden. Nach beendeter Polymerisation wird der Autoklav üblicherweise entspannt.

Bei dem erfindungsgemäßen Verfahren gibt es keinerlei Probleme mit Wandbelägen und Brockenbildung. Die eingesetzten Katalysatorsysteme sind zu einem beliebigen Zeitpunkt aktivierbar, sie sind luft- und feuchtigkeitsunempfindlich, können lange gelagert werden und sind nicht pyrophor. Zudem entstehen Polymerisate mit enger Molekulargewichtsverteilung, die sich zur Herstellung von Fasern, Folien und Formkörpern eignen.

### Beispiele

### Beispiel 1: Umsetzung von SiO₂ mit Aluminium-tri-isobutyl (Stufe A))

100 g SiO₂ (SG 332 der Fa. Grace; 12 Stunden bei 200°C getrocknet) wurden in 1 l trockenem Heptan suspendiert. Bei Raumtemperatur wurden 140 ml einer 2-molaren Lösung von Aluminium-tri-iso-butyl in Heptan innerhalb von 30 Minuten zugetropft, wobei die Temperatur auf 35°C anstieg. Anschließend wurde über Nacht gerührt, der Feststoff abfiltriert und zweimal mit Pentan gewaschen. Dann wurde im Ölpumpenvakuum bis zur Gewichtskonstanz getrocknet (Träger 1).

### Beispiel 2: Umsetzung mit Metallocenkomplex und N,N-Dimethylanilinium-tetrakis(pentafluorphenyl)borat (Stufe B))

0,5 mmol des jeweiligen Metallocenkomplexes und jeweils 0,5 mmol N,N-Dimethylanilinium-tetrakis (pentafluorphenyl) borat wurden in 50 ml absolutem Toluol bei 80°C gelöst. Hierzu wurden jeweils 5 g des nach Beispiel 1 erhaltenen Materials gegeben und die so erhaltene Dispersion 30 Minuten bei 80°C gerührt. Danach wurde das Lösungsmittel bei 10 mbar abgezogen und der feste Rückstand im Ölpumpenvakuum getrocknet, bis ein gut rieselfähiges Pulver zurückblieb.

Eingesetzte Metallocenkomplexe:
- III 1:: Bis (n-butylcyclopentadienyl) zirkoniumdichlorid
- III 2:: Dimethylsilandiylbis (indenyl) zirkoniumdichlorid
- III 3:: Ethylenbis (indenyl) zirkoniumdichlorid
- III 4:: Dimethylsilandiyl (N-tert.-butylamido) (η⁵-2,3,4,5-tetramethylcyclopentadienyl) titandichlorid

### Beispiele 3 bis 6: Herstellung von Polyethylen in der Gasphase

Ein 1 l-Stahlautoklav wurde mit 80 g Polyethylengrieß gefüllt, auf 70°C aufgeheizt und 1 Stunde mit Argon gespült. Dann wurden 3 ml einer 0,2-molaren Lösung von Tri-n-hexyl-aluminium in Heptan eingespritzt. Anschließend wurden jeweils 50 mg des in Beispiel 2 hergestellten Materials mit Ethylen eingeblasen und der Ethylendruck auf 40 bar erhöht. Die Polymerisation wurde bei 70°C durchgeführt bis 150 g Ethylen aufgenommen waren und durch Entspannen abgebrochen.

Über die eingesetzten Verbindungen und die Eigenschaften der Polyethylene gibt die nachfolgende Tabelle Auskunft.

Die Grenzviskosifcät η wurde nach ISO 1628/3 bestimmt.

**Tabelle**

| Bsp. | Metallocenkomplex | Produktivität [g Polymer/ g Katalysator*] | η [dl/g] |
|---|---|---|---|
| 3 | III 1 | 1604 | 4,52 |
| 4 | III 2 | 3290 | 2,23 |
| 5 | III 3 | 2256 | 1,54 |
| 6 | III 4 | 1306 | 13,9 |

| | | | |
|---|---|---|---|
| *) Katalysator bedeutet das nach Stufe B) erhaltene Produkt | | | |

## Patentansprüche

1. Verfahren zur Herstellung von Polymerisaten von Alkenen durch Gasphasenpolymerisation in Gegenwart von Katalysatorsystemen, dadurch gekennzeichnet, daß als Katalysatorsysteme geträgerte Katalysatorsysteme, erhältlich durch
A) Umsetzung eines anorganischen Trägermaterials, welches ein feinteiliger Feststoff ist, dessen Teilchendurchmesser im Bereich von 1 bis 200 µm liegen, mit einer Metallverbindung der allgemeinen Formel I
M¹ (R¹) ᵣ (R² ) ₛ (R³ ) ₜ (R¹ )ᵤ I
in der
M¹ ein Alkali-, ein Erdalkalimetall oder ein Metall der III. oder IV. Hauptgruppe des Periodensystems bedeutet,
R¹ Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
R² bis R⁴ Wasserstoff, Halogen, C₁- bis C₁₀-Alkyl, C₆- bis C₁₅-Aryl, Alkylaryl, Arylalkyl, Alkoxy oder Dialkylamino mit jeweils 1 bis 10 C-Atomen im Alkylrest und 6 bis 20 C-Atomen im Arylrest,
r eine ganze Zahl von 1 bis 4
und
s,t und u ganze Zahlen von 0 bis 3 bedeuten, wobei die Summe r+s+t+u der Wertigkeit von M¹ entspricht,
B) Umsetzung des nach A) erhaltenen Materials mit dem Umsetzungsprodukt aus mindestens einem Metallocenkomplex in seiner Metalldihalogenid-Form und einer metalloceniumionenbildenden Verbindung, ausgewählt aus der Gruppe der starken, neutralen Lewissäuren, der allgemeinen Formel IV
M⁴X¹X²X³ IV,
in der
M⁴ ein Element der III. Hauptgruppe des Periodensystems bedeutet,
X¹, X² und X³ für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen,
der ionischen Verbindungen mit lewissauren Kationen und der ionischen Verbindungen mit Brönsted-Säuren als Kationen,
und
C) anschließender Umsetzung mit einer Metallverbindung der allgemeinen Formel II
M²(R⁵)ₒ(R⁶)ₚ(R⁷)_{q} II
in der
M² ein Metall der III. Hauptgruppe des Periodensystems bedeutet,
R⁵ Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
R⁶ und R⁷ Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
O eine ganze Zahl von 1 bis 3
und
p und q ganze Zahlen von 0 bis 2 bedeuten, wobei die Summe o+p+q der Wertigkeit von M² entspricht,
eingesetzt werden.

2. Verfahren nach Anspruch 1, dadurch gekennzeichnet, daß das nach A) erhaltene Material isoliert und getrocknet wird.

3. Verfahren nach den Ansprüchen 1 bis 2, dadurch gekennzeichnet, daß in der allgemeinen Formel I M¹ für Aluminium, die Reste R¹ bis R³ für C₁- bis C₁₀-Alkyl und u für Null stehen.

4. Verfahren nach den Ansprüchen 1 bis 3, dadurch gekennzeichnet, daß in der allgemeinen Formel II die Reste R⁵ bis R⁷ für C₁- bis C₁₀-Alkyl stehen.

5. Verfahren nach den Ansprüchen 1 bis 4 zur Herstellung von Polymerisaten des Ethylens.

## Claims

1. A process for the preparation of polymers of alkenes by gas-phase polymerization in the presence of catalyst systems, wherein the catalyst systems used are supported catalyst systems obtainable by
A) reaction of an inorganic carrier material comprising a finely divided solid having a particle diameter of from 1 to 200 µm with a metal compound of the formula I
M¹(R¹)ᵣ(R²)ₛ(R³)ₜ(R⁴)ᵤ I
where
M¹ is an alkali metal, an alkaline earth metal or a metal of main group III or IV of the Periodic Table,
R¹ is hydrogen, C₁-C₁₀-alkyl, C₆-C₁₅-aryl, alkylaryl or arylalkyl, each having 1 to 10 carbon atoms in the alkyl radical and 6 to 20 carbon atoms in the aryl radical,
R² and R⁴ are each hydrogen, halogen, C₁-C₁₀-alkyl, C₆-C₁₅-aryl, alkylaryl, arylalkyl, alkoxy or dialkylamino each having 1 to 10 carbon atoms in the alkyl radical and 6 to 20 carbon atoms in the aryl radical,
r is an integer from 1 to 4
and
s,t and u are integers from 0 to 3, the sum r+s+t+u corresponding to the valency of M¹,
B) reaction of the material obtained according to A) with the reaction product of at least one metallocene complex in its metal dihalide form and a compound forming metallocenium ions selected from the group consisting of strong neutral Lewis acids of the formula IV
M⁴X¹X²X³ IV
where
M⁴ is an element of main group III of the Periodic Table,
X¹, X² and X³ are each hydrogen, C₁-C₁₀-alkyl, C₆-C₁₅-aryl, alkylaryl, arylalkyl, haloalkyl or haloaryl, each having 1 to 10 carbon atoms in the alkyl radical and 6 to 20 carbon atoms in the aryl radical, or fluorine, chlorine, bromine or iodine,
ionic compounds having Lewis acid cations and ionic compounds having Brönsted acids as cations,
and
C) subsequent reaction with a metal compound of the formula II
M²(R⁵)ₒ(R⁶)ₚ(R⁷)_{q} II
where
M² is a metal of main group III of the Periodic Table,
R⁵ is hydrogen, C₁-C₁₀-alkyl, C₆-C₁₅-aryl, alkylaryl or arylalkyl, each having 1 to 10 carbon atoms in the alkyl radical and 6 to 20 carbon atoms in the aryl radical,
R⁶ and R⁷ are each hydrogen, halogen, C₁-C₁₀-alkyl, C₆-C₁₅-aryl, alkylaryl, arylalkyl or alkoxy, each having 1 to 10 carbon atoms in the alkyl radical and 6 to 20 carbon atoms from the aryl radical,
O is an integer from 1 to 3
and
p and q are integers from 0 to 2, the sum o+p+q corresponding to the valency of M².

2. A process as claimed in claim 1, wherein the material obtained according to A) is isolated and dried.

3. A process as claimed in claims 1 and 2, wherein, in the formula I, M¹ is aluminum, R¹ to R³ are C₁-C₁₀-alkyl and u is zero.

4. A process as claimed in any of claims 1 to 3, wherein, in the formula II, R⁵ to R⁷ are each C₁-C₁₀-alkyl.

5. A process as claimed in any of claims 1 to 4 for the preparation of polymers of ethylene.

## Revendications

1. Procédé pour la préparation de polymères d'alcènes par polymérisation en phase gazeuse en présence de systèmes catalytiques, caractérisé par le fait qu'on utilise comme systèmes catalytiques des systèmes catalytiques sur support pouvant être obtenus par
A) réaction d'une matière support inorganique, qui est un colorant finement divisé dont les diamètres des particules se situent dans l'intervalle de 1 à 200 µm, avec un composé métallique de formule générale I
M¹ (R¹)ᵣ (R²)ₛ (R³)ₜ (R⁴)ᵤ I
où
M¹ représente un métal alcalin ou alcalino-terreux, ou un métal du groupe principal III ou IV de la classification périodique,
R¹ désigne l'hydrogène, un alkyle en C₁ à C₁₀, un aryle en C₆ à C₁₅, un alkylaryle ou un arylalkyle ayant chacun 1 à 10 atomes de carbone dans le reste alkyle et 6 à 20 atomes de carbone dans le reste aryle,
R² à R⁴ représentent l'hydrogène, un halogène, un alkyle en C₁ à C₁₀, un aryle en C₆ à C₁₅, un alkylaryle, un arylalkyle, un alcoxy ou un dialkylamino ayant chacun 1 à 10 atomes de carbone dans le reste alkyle et 6 à 20 atomes de carbone dans le reste aryle,
r est un nombre entier de 1 à 4
et
s, t et u désignent des nombres entiers de 0 à 3, tandis que la somme r+s+t+u correspond à la valence de M¹,
B) réaction de la matière obtenue selon A) avec le produit de réaction d'au moins un complexe de métallocène sous sa forme dihalogénure métallique et d'un composé donnant des ions métallocénium, choisi dans le groupe des acides de Lewis neutres, forts, de formule générale IV
M⁴X¹X²X³ IV,
où
M⁴ représente un élément du groupe principal III de la classification périodique,
X¹, X² et X³ désignent l'hydrogène, un alkyle en C₁ à C₁₀, un aryle en C6 à C₁₅, un alkylaryle, un arylalkyle, un halogénoalkyle ou un halogénoaryle, ayant chacun 1 à 10 atomes de carbone dans le reste alkyle et 6 à 20 atomes de carbone dans le reste aryle, ou le fluor, chlore, brome ou iode,
des composés ioniques avec des cations acide de Lewis et des composés ioniques avec des acides de Brönsted comme cations,
et
C) réaction subséquente avec un composé métallique de formule générale II
M² (R⁵)ₒ(R⁶)ₚ(R⁷)_{q} II
où
M² désigne un métal du groupe principal III de la classification périodique,
R⁵ représente l'hydrogène, un alkyle en C₁ à C₁₀, un aryle en C₆ à C₁₅, un alkylaryle ou un arylalkyle ayant chacun 1 à 10 atomes de carbone dans le reste alkyle et 6 à 20 atomes de carbone dans le reste aryle,
R⁶ et R⁷ représentent l'hydrogène, un halogène, un alkyle en C₁ à C₁₀, un aryle en C₆ à C₁₅, un alkylaryle, un arylalkyle ou un alcoxy ayant chacun 1 à 10 atomes de carbone dans le reste alkyle et 6 à 20 atomes de carbone dans le reste aryle,
O désigne un nombre entier de 1 à 3
et
p et q désignent des nombres entiers de 0 à 2, tandis que la somme o+p+q correspond à la valence de M².

2. Procédé selon la revendication 1, caractérisé par le fait que la matière obtenue selon A) est isolée et séchée.

3. Procédé selon les revendications 1 à 2, caractérisé par le fait que dans la formule générale I M¹ désigne l'aluminium, les restes R¹ à R³ représentent un alkyle en C₁ à C₁₀ et u vaut zéro.

4. Procédé selon les revendications 1 à 3, caractérisé par le fait que dans la formule générale II les restes R⁵ à R⁷ désignent un alkyle en C₁ à C₁₀.

5. Procédé selon les revendications 1 à 4 pour la préparation de polymères de l'éthylène.
